Europäisches Patentamt

European Patent Office

Office européen des brevets

(11) Publication number: **0 472 070 A2**

## EUROPEAN PATENT APPLICATION

(21) Application number: **91113432.8**

(22) Date of filing: **09.08.91**

(51) Int. Cl.⁵: **G06F 15/40**

(30) Priority: **22.08.90 US 570758**

(43) Date of publication of application:
**26.02.92 Bulletin 92/09**

(84) Designated Contracting States:
**DE FR GB**

(71) Applicant: **XEROX CORPORATION**
**Xerox Square - 020**
**Rochester New York 14644(US)**

(72) Inventor: **Pajak, Henry G.**
**5612 Lincoln Road**
**Ontario, New York(US)**

(74) Representative: **Patentanwälte Grünecker,**
**Kinkeldey, Stockmair & Partner**
**Maximilianstrasse 58**
**W-8000 München 22(DE)**

(54) **Electronic library.**

(57) An electronic library metaphor on a computer workstation that includes a shared books with data base metaphor, a reference books metaphor, and a card catalog metaphor in one system that allows large object oriented data bases to be organized and accessed in an exclusive environment and in addition allows access to screen icons, creates a visual hierarchy of related and shared objects, and allows mutually exclusive access to the metaphors within the library.

FIG. 3

EP 0 472 070 A2

## BACKGROUND OF THE INVENTION

The invention generally relates to computer workstation/user interfaces and, more particularly, to an electronic library metaphor on a workstation that allows the organizing, accessing, and querying of information unique to physical libraries in an electronic workstation environment that can be mutually exclusive.

The increasing proliferation and utility of professional workstations and personal computers has required the design of user-friendly computer and workstation interfaces, as well as techniques to access information files and data bases.
INSERT #1

## PRIOR ART

U.S. Patent No. 4,633,430 to Cooper discloses a control structure for a document processing system wherein a workstation operating a system is shown. Sede col. 4, line 41 - col. 5, line 2. A method of document access by various applications is ;shown. See col. 10, lines 15-69.

U.S. Patent No. 4,714, 989 to Billings discloses a functionally structured distributed data processing system wherein a user's workstation can access any other data without trouble. See col. 5, lines 13-26. A method to allow an application to store or retrieve information from another data center is shown. See col. 7, line 16-32.

U.S. Patent No. 4,791,561 to Huber discloses an interactive construction of means for database maintenance wherein a method of storing data structures is shown. See col. 7, lines 9-34. A data dictionary which keeps track of each database's characteristics is shown. See col. 17, lines 25-39

U.S. Patent No. 4,506,326 to Shaw et al. discloses an apparatus and method for synthesizing a query for accessing a relational data base. Specifically, a method is provided for operating a computing apparatus to translate a graphic language query, input at a user terminal, into a linear query (e.g. SQL). The graphic language query is expressed as one or more language elements appearing in rows and columns of an example table. The statements which comprise the linear query are automatically generated from the graphic query input at the user terminal.

U.S. Patent No. 4,358,824 to Glickman et al. discloses a system for document storage and retrieval comprising a set of programs for controlling document abstracting and archiving. A document is retrieved from storage in response to an input query of terms descriptive of the content of the document. The query text statement is input from a source, which may be any of various input devices, such as a keyboard, script table or specially constituted touchtone pad (see column 3, lines 18-25).

There are also commercially available systems (e.g., the Apple MacIntosh) in which icons are used to represent and access files in the system.

It should be noted that a structured data object generally means a data object that contains a series of other data objects linked together in a predetermined manner that may or may not include a visual representation or functional abstraction on a display screen. Such data objects may have an associated set of operations and be linked to one another for one or more functional purposes. An example of a structured data object is the electronic versions of a work space or desktop as defined by the display screen. A typical screen display contains multiple structured data objects, such as file folders or documents represented on the screen as icons, in turn containing other structured data objects. For example, a file folder may contain several documents, other file folders or a file drawer. A structured data object that is capable of holding other structured data objects is also referred to in the art as a "container", that is, a file folder is a container for documents. An example of a container is the file folder of the MacIntosh Computer of Apple Computer, Inc. that may contain a plurality of other file folders displayed in their iconic representation of individual folders.

As is known in the art, the representation and display of structured data objects in a workstation environment may take various forms. A common technique is to present the contents or entries of structured data objects in a display region or work space, such as a view window, on a CRT display. In order to maintain an uncluttered display area in the displayed setting, it may be useful to provide a shrunken or miniature representation of the structured data object, such as an icon, when a user is not engaging in activities relating to the structured data object. Such a representation of data may take the form of iconic representations of different structured data objects positioned on a work space of a display screen, that is, a display illustrating an office desktop metaphor employing various abstractions of a typical office environment. The desktop metaphor represents real office objects that are accessible directly while seated at a desk or only accessible by moving from a desk to another office location away from the desk. Examples of these abstractions are a desktop, inbasket, outbasket, documents, file folders and "books", which contains two or more consecutive document portions which together comprise a complete document. An example of such an office metaphor is the ViewPoint™ ("VP") software system available from Xerox Corporation in connection with its 8010 and 6085 display workstations.

A difficulty with the prior art electronic systems is the inability to access and maintain collections and archives of information in a manner analogous to a standard library with card catalogs, reference materials, and systematically shelved books. Another difficulty is the unavailability of a data base that is accessible to provide information about documents, files, and various types of containers and to relate common or shared information..

It is an object of the present invention, therefore, to provide a new and improved technique for managing large object oriented types of information, in particular, to provide an electronic library metaphor on a workstation. It is a further object of the present invention to provide a workstation that allows the organizing, accessing, and querying of information unique to physical libraries in an electronic workstation environment that can be mutually exclusive. Further advantages of the present invention will become apparent as the following description proceeds, and the features characterizing the invention will be pointed out with particularity in the claims annexed to and forming a part of this specification..

## SUMMARY OF THE INVENTION

The present invention is an electronic library metaphor on a computer workstation that includes a shared books with data base metaphor, a reference books metaphor, and a card catalog metaphor in one system that allows large object oriented data bases to be organized and accessed in an exclusive environment and in addition allows access to screen icons, creates a visual hierarchy of related and shared objects, and allows mutually exclusive access to the metaphors within the library.

## BRIEF DESCRIPTION OF THE DRAWINGS

For a better understanding of the present invention, reference may be had to the accompanying drawings wherein the same reference numerals have been applied to like parts and wherein:

Figure 1 is an illustration of a typical office information system incorporating the present invention:

Figure 2 is an enlarged view of the display screen of Figure 1;

Figures 3 and 4 illustrate an electronic version of a library in accordance with the present invention:

Figure 5 illustrates the relationship of shared library objects in accordance with the present invention;

Figure 6 illustrates a multiple shared library example in accordance with the present invention;

Figure 7 is a representation of a Shared Book with Data Base Property Sheet; and

Figure 8 is a Quick Query window and data attachment window.

## DESCRIPTION OF THE PREFERRED EMBODIMENT

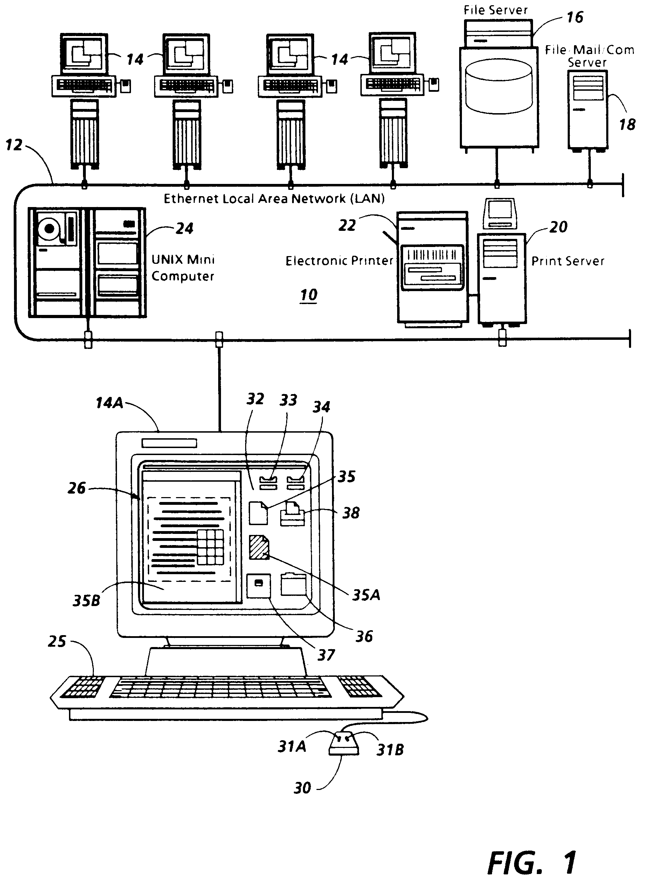

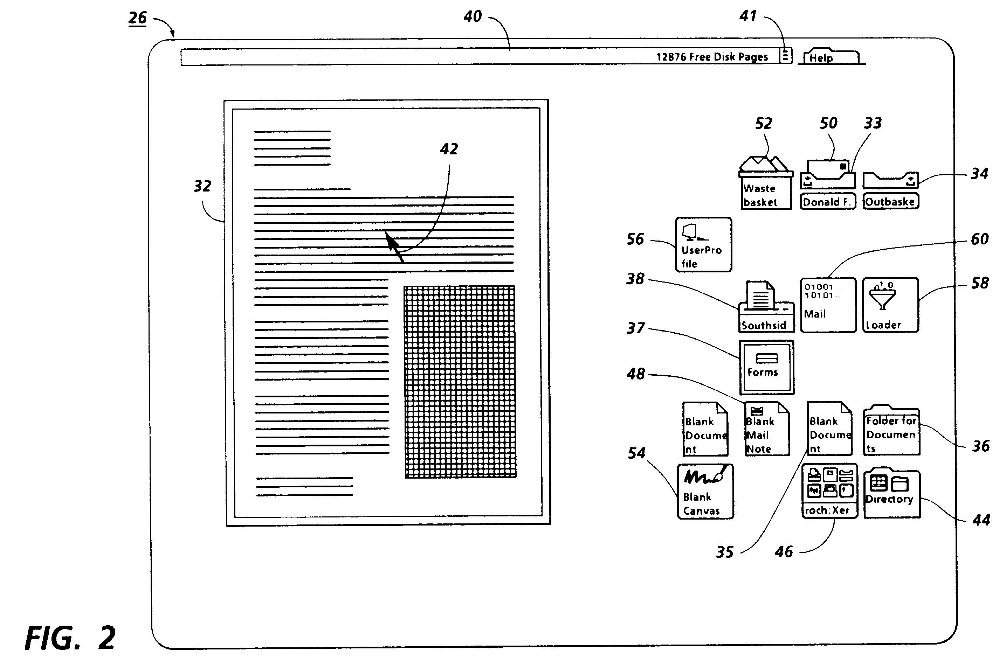

Reference is now made to a typical office information system 10 illustrated in Figures 1 and 2. System 10 includes an Ethernet local area network (LAN) 12, to which a number of user workstations 14, including workstation 14A is connected. Workstations 14 may be, for example, the Xerox 6085 professional workstation. Lan 12 may also have other office connected equipment such as network file server 16, network file/mail/communication server 18, printer server 20 and printer 22. Also, a large capacity remote storage facility, such as UNIX mini computer 24 may be connected to Lan 12. System 10 is a collaborative type system, meaning that it enables users at different workstations 14 to work together in real-time by processing and passing information among one another and storing and retrieving information from storage services 16 and 24 via network 12.

The collaborative functions of system 10 could also be centralized in a single main CPU, could be distributed among processors at the workstations, or could be provided in any combination of centralization and distribution. Similarly, Lan 12 could take any appropriate configuration capable of providing the necessary communications to support collaboration. System 10 includes display-based user interfaces, with each workstation 14 including a display device and a user input device. In this connection, workstation 14A includes a CRT display screen 26 and keyboard 25 with a display cursor mouse 30. Mouse 30 may be, for example, an optical mouse of the type disclosed in U.S. Patent No. 4,521,772. Mouse 30 has two buttons or micro switches 31A and 31B which are respectively referred to as the left button and the right button.

As is common with mouse 30, the movement of the mouse housing on a surface causes display cursor 42 visually move on screen 26 in the same direction of mouse housing movement. Point button 31A when pressed and released, is used to indicate an object on screen 26 or to an item within an object on screen 26 in the same direction of mouse housing movement. Point button 31A, when pressed and released, is used to indicate an object on screen 26 or to an item within an object on screen 26. This point function is referred to as "clicking" the mouse button 31A or 31B. Button 33 is often used in combination with left button 31A. For example, in selection of text, the left button 31A is a reference pointer to the beginning place of text to be selected and right button 31B is a second pointer to the end place of text encompassed by the combination of these two selections.

System 10 includes an object oriented display system that comprises icon representations of different structured data objects positioned on a work space of a display screen, e.g., a display illustrating an office desktop metaphor employing various abstractions of a typical office environment, representative of real office objects. An example of such an office metaphor is the ViewPoint™ ("VP") software system available from Xerox Corporation in connection with its 8010 and 6085 display workstations. Examples of these abstractions in Fig. 1 are a desktop 32, inbasket 33, outbasket 34, documents 35 and 35A, file folder 36, file drawer 37 and printer 38. Document icon 35A is shown "opened", in that an ⟨OPEN⟩. command has been invoked and opened window 35B has appeared displaying the document in full scale. Printer 38 is an iconic representation of printer 22 on Lan 12. Any document 35 moved, via a ⟨COPY⟩ command from keyboard 25 onto printer icon 37 will be printed at printer 22. Electronic mail is received and sent via a workstation inbasket 33 and outbasket 34, respectively, from and to other workstations on LAN 12 or to workstations on other networks via File/Mail/Com server 18.

Message area 40 is the header at the top of screen 26 for displaying system messages to a workstation user. In the example shown there is an indication of the number of free pages left on an associated disk drive. Other messages would be prompts to suggest the next action to be taken by a user such as involving a ⟨MOVE⟩ command from moving an object to another place on screen 26 and display of the message in header 40, "Please specify a destination". The triple bar symbol 41 at the end of header 40 is a transient or pop-up menu activated via mouse pointer button 31A held in its down position, thereby visually producing a menu which contains a list of command items which may be, for example, such items as "Date and Time", "End Session" (logoff), "Spelling Checker", etc.. These sub commands are involved by moving the cursor pointer with button 31A still held in its down position over a selected item, which is then highlighted to indicate to the user its potential selection. At this point, if button 31 is released by the user, the selection is accomplished, the pop-up menu visually disappears and the command item selected is initiated.

Other commands for performing functions may be invoked from keyboard 29. These functions include ⟨DELETE⟩, which will delete the object and its contents, ⟨COPY⟩ which will copy the object and its contents to another desktop location, ⟨MOVE⟩ which will move the object and its contents to another desktop location, ⟨PROPS⟩ which will open a window displaying properties or parameters for a particular object and provide alternative choices for these parameters and ⟨OPEN⟩ which opens an object to reveal the contents of the object in a window, if the object is designated to have a content, for example, a document content.

The icons on desktop 32 are aligned vertically and horizontally according to an invisible orthogonal grid. Thus, the icon placement on desktop 32 is not arbitrary and the application software is capable of determining and keeping track of the location of icons on the surface of desktop 32. The locations of each square in the desktop grid are listed in the desktop software so that at any given time, the desktop application can determine the X, Y location of icons on its surface and also help to determine whether the positioning of one icon on top of another on the desktop is a permissible function. For example, the dropping or releasing of a document icon onto a file folder icon or on a printer icon, are both permissible functions; the dropping of one document icon onto another document icon is not a permissible function.

Many of the icons may be opened via the ⟨OPEN⟩ function to reveal their content, such as a list or directory of files or the content of a document. In this sense, the icons are containers representing pointers to files and other bodies of stored data. Icon 44 is a directory divider which when opened contains a plurality of directory icons, one of which is icon 46. Directory icon 46 serves as a source of icons representing shared and remote objects that the user may access, such as filing and printing services.

Icon 48 is a Blank Mail Note. This icon may be copied or moved or opened, and a message typed in the open window of the icon and the icon closed after message typing. Mail icon 48 may then be moved to outbasket icon 34 where it is electronically sent to an addressee of the note. Icon 36 is a file folder into which document icons 35, 35A and mail note icon 48 may be placed. Opening of folder icon 36 will reveal a directory listing objects contained in the folder either by alphabetical order or chronologically by revision date, any one of which may be opened in the folder or moved from the folder and placed on desktop 32.

Icon 34 as mentioned, is an outbasket for electronic mail messages while icon 33 is an inbasket for receiving incoming electronic messages, such as mail note icon 48. Inbasket icon 33 displays a mail flag 50 indicating that there is mail to be retrieved by the addressee named on the inbasket. Icon 33 may be opened to reveal a mail window through which mail notes 48 may be accessed and opened or may be moved to the desktop and opened for reading.

Icon 37 is a file drawer for storing data icons and may be opened revealing a directory displaying the titles of documents or folders they contain, which may then be individually opened or removed or copied from the file drawer. Icon 38 is a representation of printing resource. The actual printing device may be directly connected as printer 22 or may be remotely located. Document icons 35, 35A, mail note icon 48 or folder icon 36 may be moved or copied and dropped onto printer icon 38 and their content printed.

Wastebasket icon 52 is a container into which, for example, mail notes, documents or folders may be dumped for disposal but are retrievable since they are still in the container. The metaphor is that the workstation user changes his/her mind about destroying (deleting) a document or the like and removes the document from the wastebasket by opening icon 52 and moving the document icon back onto desktop 32. The contents of the wastebasket are permanently removed by a positive delete command.

Icon 54 is a freehand drawing program comprising a canvas which the user may copy graphics into or use palette tools to produce free hand drawings. Icon 56 is the User profile for desktop 32 which contains a listing of various ViewPoint applications present and supporting the desktop. Various parameters of these applications may be edited upon opening the user profile icon to change, for example, the location of window structures.

Icon 58 represents a program or application loader into which a program may be loaded and run on desktop 32. For example, mail program icon 60 comprising a mail access environment may be moved or positioned onto loader icon 58 to load a ViewPoint application in the run time. For a more detailed description of this system, reference is made to U.S. Patent Application Serial No. 856,525, field April 28, 1986 and assigned to the same designee as the present invention and incorporated herein by reference. Reference should also be made to U.S. Patent Application, docket number D/88015, U.S. Serial Number 401,600 filed August 31, 1989 and U.S. Serial Number 419,820, filed October 10, 1989, and incorporated herein by reference.

In the system described in Figures 1 and 2, there is a Shared Book capability. That is, there is the ability for many people to modify fields organized in books, that is, without problems of the same file being modified at the same time by others.

There is also the feature of Shared Books with Data Base, that is, same shared capability as Shared Books but "attributes" of files and their contents are included. For example, fields and their content, filing name, who modified them and when, as well as graphic and data arrangements are also populated to a central data base for easy access and querying. Shared Books allows folders to be added to the books as support. Shared Books are created from a simple "Blank Book" icon available in the workstation directory file on the desktop.

A data base access or Quick Query window is integrated into the interface of shared books with data base and backing the data and files associated with the shared book and data base. One or more shared books with data base are considered to form a shared library to be queried by Quick Query operations.

The Quick Query window or technique offers a simple but very powerful method of accessing much of the information contained in documents and about other files that have been checked into a Shared Book with Data Base. The window provides the ability to search information across many books by using icons and filing in query criteria without the need to write SQL statements. Information Management, one of the choices available, allows quick access to data that falls into categories such as files organized into books, filing information such as names, file types, creator's modification dates, etc., graphic models for all notations - - such as objects and connections and the data base attachments and fields information including field name, type and first 240 characters of the content. The output is organized in tables that can be made into document tables. The techniques can also be for creating reports for data contained in documents, for accessing classical data dictionary information, finding information "buried" in documents as well as finding the connectivity of graphic models. The system automatically connects with an ORACLE™ data base or with any related data base anywhere the database is located. There is a great deal of information maintained on the ORACLE™ database that is accessed that "backs" each Shared Book with Data Base. This window allows the system to easily combine the query across each category of information. For more detail, reference is made to U.S. Serial No. 419,820 filed October 10, 1989 and incorporated herein.

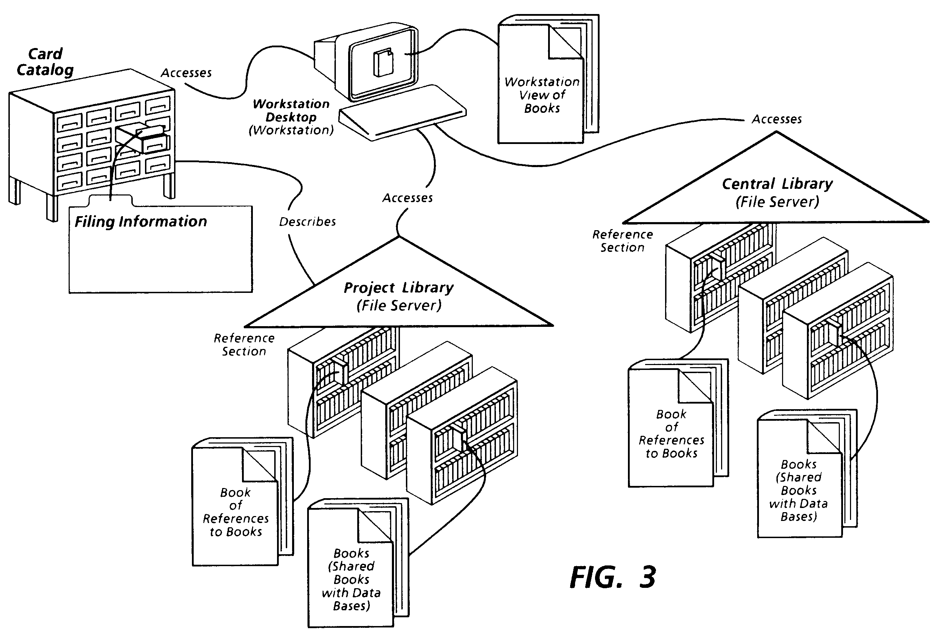

In accordance with the present invention the Electronic Shared Library illustrated in figure 3 provides the organization qualities characteristic of conventional libraries and a Shared Distributed organization essential for development applications -- including graphical modeling support for Computer Aided Software Engineering (CASE), Project Management and Document Management.

Librarians perform some of the traditional library tasks such as determining how and where types of information should be classified and stored. In the Electronic library, this is still true since these are system related activities essential to organizing information from the beginning. Users may take a more active role, though in changing the information within books. Shared Books themselves electronically take over mutually exclusive access to the libraries changing content. System Administrators now manage electronic resources SVP Shared *Books* are especially suited for development applications where information is updated by many people and is constantly changing. Electronic Shared Libraries therefore can allow access to not only the most recent information, but also previous versions of information as desired.

Since the library is accessed electronically, an office now becomes a study, reference, and research room. One can always obtain a printed copy of the information to examine simply by sending it to an electronic printer. There is no limit to the number of publications one can "borrow" and one need not reserve the books; all you need is the access rights to the information. As illustrated in Figure 2, *Shared Books* now contain all of the ICONs including documents, Folders, File Drawers, Software Applications, Graphics and Data. "Quick Queries" enables card catalog access.

Books of references are Shared Books that contain references to other books enabling locating information stored in other places. Reference books are located in the reference section of Electronic libraries as they are in conventional libraries. In Electronic libraries reference book information may include: Quick Reference Book containing project plans, organization charts and responsibilities, forms, and Process Procedures, as well as Actual Documentation works.

In conventional libraries, computer terminals are replacing Card Catalogs. Electronic Shared Libraries provide an even easier access method to the card catalog information that is especially suited for Electronic oriented documents and the information within them. An integrated iconic Quick Queries capability provides the tool for cross referencing, document management information, project plans, schedules, graphic information that is part of commercial methodologies including Object Oriented Information Modeling, Structured Analysis and Design and the data associated with them. One can quickly search the library to find a variety of supporting information. For circulation materials and information, Electronic Mail using the EtherNet networkTM now replaces hardcopy notification that describes additions to libraries. Integrated Mutual Exclusion is a new part of the Electronic Shared Libraries. All files are protected from modification by more than one person at the same time yet allowing everyone to read or print them at any time. This capability is vital to development applications -- where fast paced changes and communication of continually changing information is going on.

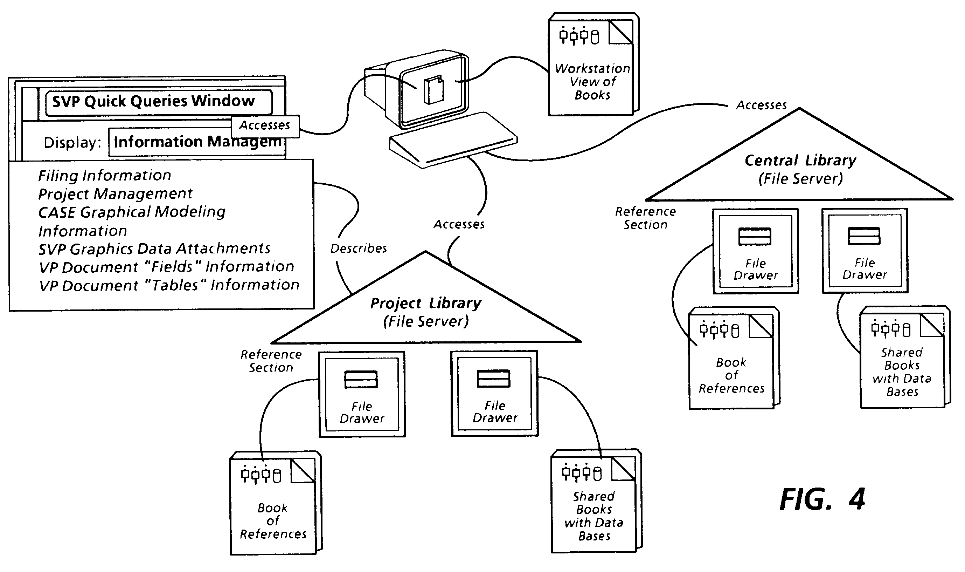

The following is a description of the electronic equivalent to the entities that are a part of conventional libraries. By understanding these objects, one can create and use Electronic Shared Libraries effectively for any application. File drawers as shown in Figure 4 are an Electronic desktop metaphor that allows listing of files that reside remotely on a file server. In the *Shared Library*, *Remote Shared Books* are located in the file drawer. The *Shared Books* contain all of the rest of the common icons including *VP Documents, Folders, Canvases* etc. that used to be at the file drawer level.

A Shared Book with Database as shown in Figure 4 is an icon which allows a user to modify files in a shared environment *at a workstation*. *Mutual exclusion*, where no more than one person is allowed to modify a file at the same time, is implemented to protect the integrity of the files. *Quick Queries*, a powerful Card Catalog-like window allows speedy access to a portion of the file and document content information contained within. It is available through a menu command in the window header and by "chording" (pressing both mouse buttons down at the same time) over the icon. The outside border of the icon is gray indicating that it is a reference icon. The inside portion is solid indicating that it can deal with real files on the desktop. A Reference Book, as shown in Figure 4, is a Shared Book with Database. Each Library may have at least one book that contains references to all of the rest of the books in the Library. The reference icons in this book can be searched using Quick Queries, an efficient way of finding the names of books that are part of each Library.

A Remote shared book resides on a file server and is created automatically after filling out a Book property sheet. It's contents is viewed by all who open a *Shared Books* on their desktop. It is commonly referred to as the *"truth"* since it holds the files that everyone using Shared Books accesses. The icon has a solid border and solid people indicating that it holds the actual file content. By opening this file on a server, a menu command is available to create a workstation version of the Shared Book that can be used to modify files.

A reference to a Shared Book is effectively a pointer to the Remote Shared Book on a file server. The reference icon to a Shared Book will provide the user with an "All levels" "Highest Version" display of the Remote Shared Book as well as a "Quick Queries" menu button for connecting directly to a database that provides quick access to much of the information contained in a Shared Book. This icon is recommended to be the one that is sent through Electronic Mail since it is a pointer to files. The Reference to a Shared Book is gray on the outside and inside indicating that it is totally a reference icon.

A Card Catalog or Quick Queries, is a window that is a direct transparent connection to a database that "backs" each Shared Book. The Quick Queries window is accessible in the window headers of the the workstation Shared Book (and by chording), and the reference to a Shared Book Icon. One can perform extensive cross reference queries transparently to an ORACLE TM Database iconically across many Shared Books querying access combinations of Filing, Graphics, Data Attachments and ViewPoint Fields using this window.

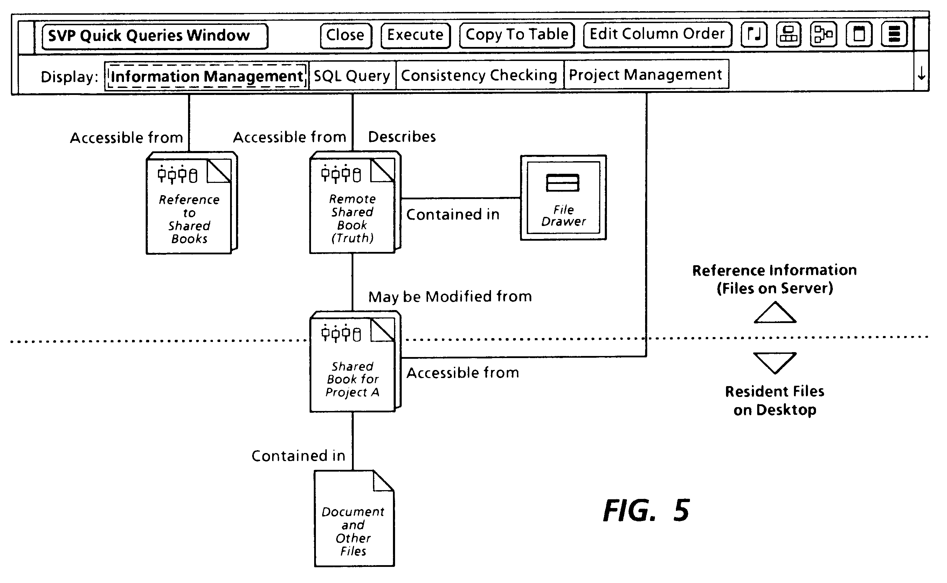

Figure 5 describes the relationships of these Shared Library entities. It is important to observe the location of where the actual real shared information exists (these are the icons with black borders) and the relationships of the rest of the entities to them to understand exactly what type of information one is looking at with each of the entities. The file drawer and the *Reference to a Shared Book* are pointers to files on a File Server -- they occupy 0 disk pages on a desktop. In contrast, the *Remote Shared Book* on the file server, is all content.

The *Workstation Shared Book* is not really a reference icon and not really a resident icon like a document -- it is somewhere in the middle. When one opens a *Workstation Shared Book* icon, what is on the remote server is being looked at and considered the *truth*. After locking a file in the *Shared Book Window* and then opening it, the file-(s) will be copied from the server to the workstation. After closing the document the Status column in the shared book window will indicate that it is local with the small terminal icon; a black lock will show that it is locked by you and a plus sign will indicate that it is more recent than the truth on the server. One can determine that exact status of each of Shared Book Entries from this window with respect to Remote Shared Book.

The Quick Queries Window describes the Remote Shared Book. It is accessible from all of the Shared Book related entities including the Reference icon to a Shared Book, the Remote Shared Book and the Workstation Shared Book menu header. Quick Queries offers a speedy, iconic method of performing sophisticated cross reference queries effortlessly to obtain much of the data that describes the files, graphics, VP Document Fields and Tables (all maintained transparently on an ORACLE TM Database). Based on these relationships, here is the recommendation to best use these entities: The File Drawer stores exclusively the Remote Shared Book. It is recommended that the name Library be appended to the file drawer name to indicate the purpose of the drawer. The Reference to a Shared Book Used for mailing to others and as entries in Reference Books. Open Quick Queries from this icon to save space on the desktop (instead of keeping the Workstation Shared Book on the desktop).

Remote Shared Book (Truth) is used to make Reference icons from it (by using Reference Selected Version or Reference Last-Filed Version menu commands in the window header). *Quick Queries* for Accessing *Quick Queries* from any of the *Shared Book* entities. It performs sophisticated queries across many books and many types of information as required. The Workstation Shared Book.is used modifying the truth -- also for applications where you need to open files directly from the *Remote Shared Book* without having to copy them to the desktop. Development applications usually require this form of a shared book. If this icon is mailed, be sure that all files are unlocked so that there is not content in the book.

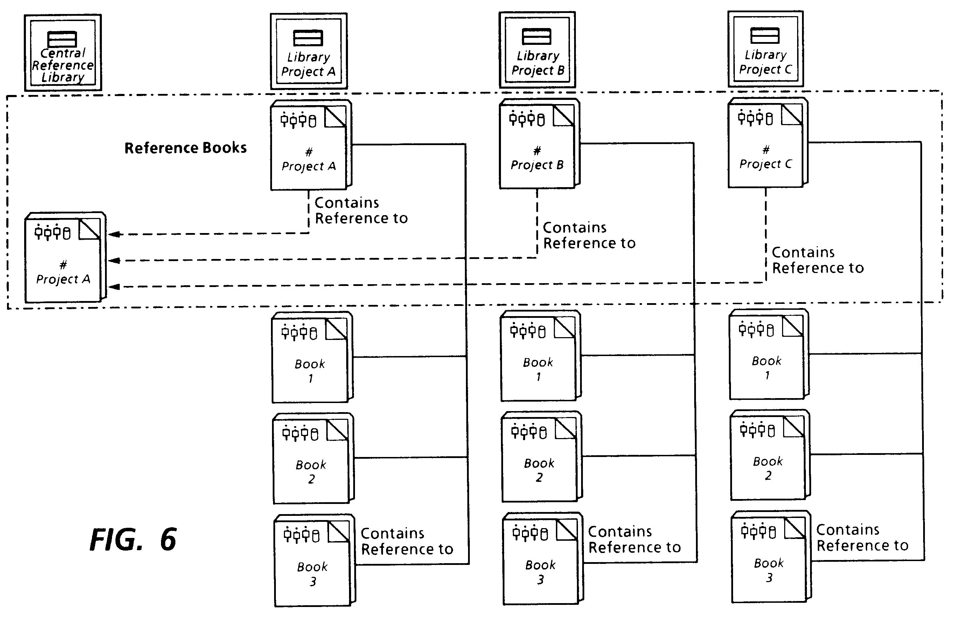

The first step in setting up a library is to create a File Drawer that will contain your Books. Figure 6 illustrates four different libraries created within file drawers that may have different purposes. It is recommended that you name the drawer by appending the name "Library" to the end of the name. Names such as "Product C Library" or " SVP Customer Library" are good examples.

It will be necessary to supply VAX TM and ORACLE TM account names and passwords. Obtain these from the VAX system administrator. The ORACLE account must have a "resource" privilege.

As shown in figure 6, create the actual Shared Books with Data Base first for the Local library reference book and then for the rest of the books with the following procedure.

To create a SHARED BOOK WITH DATA BASE, obtain a Blank Book Icon from the Directory, Press Props -- A property sheet will appear.

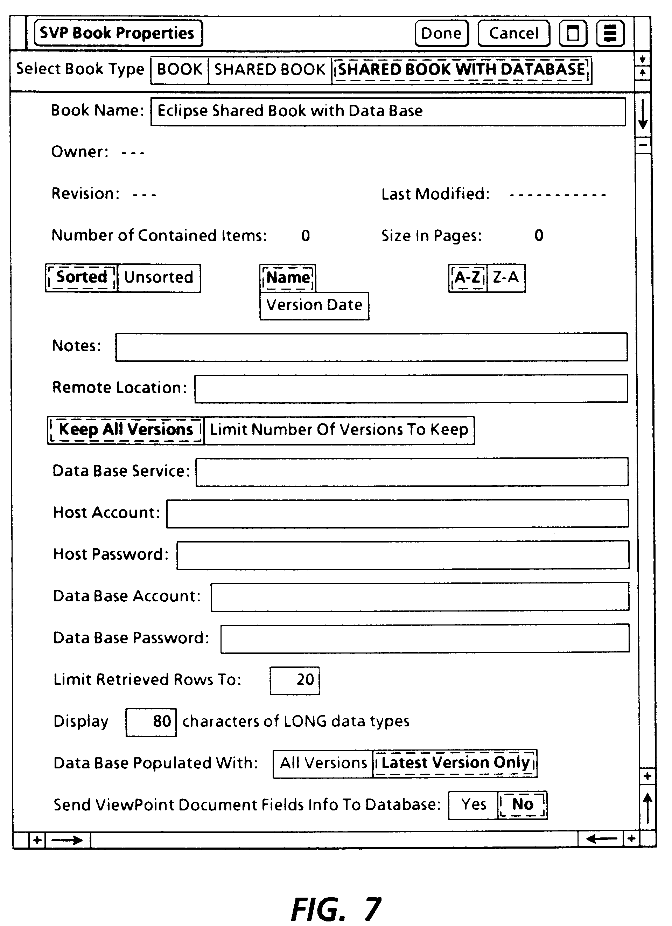

- Fill out the property sheet illustrated in figure 7 as follows: 1. Point into the "Name" field. Fill in the Name that you want the book to have. 2. Select "Sorted" or "Unsorted". If "Unsorted" is chosen, continue with step 3. If "Sorted" is chosen: Two additional fields will appear. Select "Name" or "Version Date". Select the method of sorting; "A-Z" or "Z-A".3. Press the "NEXT" key. In the field "Notes:"fill in any Notes that will be helpful to others about the use of the book or anything else that is important to it's readers or developers. 4. Press the "NEXT" key. Following the format in the Attention menu at the top of the screen. Format for Remote Location: (Server:Domain:Organization) File Drawer/Directory...fill in the Remote Location with the server location where the book's contents will be stored automatically. 5. Press the "NEXT" key. select either: a) the "Keep All Versions" field or, b) the "Limit Number Of Versions To Keep" field and, following the format in the Attention menu at the top of the screen, fill in the number of versions of files that will be allowed to exist on the server at one time. The Shared Books application will automatically delete the oldest versions of any file with more versions than the number you specify. 6. Press the "NEXT" key. The following message will appear in the Attention menu at the top of the screen. Format for Database Services Database, Name:Domain:Organization Fill in the Database Name with the name of the Network name of the Data Base Service you will be using. See system administrator for details. 7. Press the "NEXT" key. Fill in the Host Logon Name with the VAX computer account name. 8. Press the "NEXT" key. Fill in the Host Password of the VAX ™ computer account.9. Press the "NEXT" key. Fill in the Database Logon with the ORACLE ™ account name on the VAX ™. 10. Press the "NEXT" key. Fill in the Database Logon with your ORACLE ™ password for the ORACLE ™ account name on the VAX ™ 11. Press the "NEXT" key. Fill in the Limit Retrieved Rows To field to the number of rows displayed at one time during a Quick Queries session. 12. Press the NEXT key. Fill in the Display (number of) characters of LONG data types with the number of characters retrieved by default in the Quick Queries operations. A lower number will increase performance. 13. a) If "Limit Number Of Versions To Keep" was selected in Step 5, continue with Step 14. b. If "Keep All Versions" was selected in Step 5. An additional field will have appeared. This selection controls the versions that will be sent to the data base. Select "All Versions". or, Select "Latest Version Only". 14. In the field "Send ViewPoint Document Fields To Database", select "Yes" or "No". Selecting "Yes" sends the Fields in the Document to the database so that the information contained in the fields will be available for performing "Quick Queries". 15. Select "Done" to initiate the Books creation. or, Select "Cancel" to cancel the operations. (See Figure 7.) The Shared Book with Data Base will be created, automatically, on the desktop as well as at the server location and on the Data Base Service.

To create a "Reference Shared Book" for each book created and put it in the Library Reference book, it is recommended that the reference book name be the name of the library, preceded by a # so it can more easily be identified and will be at the top of lists. For sorted file drawers, it will then always appear at the top. It can be found by Quick Queries more easily as well. One can then search these books quickly from Quick Queries later on either on a project-wide or company-wide basis.

Figure 7 illustrates one reference book as part of each library with the Central Library holding reference books for all of the rest of the libraries. C. To Create a Reference to a Book: 1. Open up the Library Drawer to see the Shared Books on the server -- which are the "truth". 2. Select the book created and select "Reference Selected Icon" in the menu header. A reference icon will appear on the desktop. 3. Put that reference icon in the Reference Book

User privileged require that one gain simple access rights to information located on servers. These access rights provide the protection for your libraries content. User privileges are based on NS Filing Access rights. One can control access to any entry or the book itself as required for one application. There is a choice of: Read;Write; Add/Delete;Change; Access; attributes. For controlling access to the entries, select an entry and selecting the *Show Details* in the *Shared Books* Window Header. Then click on the access you require, select *CHANGE ACCESS LIST* and then *DONE* for the property sheet. Note: Since Shared Books are hierarchical, one can now allow access to branches of files by changing the access to a folder. All "children" of that folder will inherit those access rights. For controlling the access to the Shared Book itself, one must already have "Change Access" rights. One may change access two ways -- by pressing PROPS from a closed icon, or selecting SVC Book Properties" from the Shared Book icon in the Shared Book window header. At the present time, user privileges to the data that is part of Quick Queries exists on an ORACLE ™ Database on a VAX™ computer on the net. This is automatically made the same as the *Book's Read access list*.

As stated earlier, the Electronic Library is made up of both ViewPoint files on a file server and data about and from within those files located on a separate database. While organizing ViewPoint files has seldom been considered a significant problem since the data in them is terminal, organizing the data that is extracted from them deserves prior planning since it's use may be just beginning. Here are categories of data extracted from files (automatically and transparently) when they are checked into Shared Books. These include: NS Filing -- A part of every file; Structured Graphics (and relationships) -- Names of objects and connections and their relationships; CASE -- Graphic Modeling;Project Management -- Workbreakdown and and PERT/CPM Chart Graphics; Graphics Data Attachments -- records of data associated with each Graphics Objects; ViewPoint Fields -- one instance of each fields and it's data per document;

ViewPoint Tables -- effectively multiple instances of VP Files in a document. To determine what data should be a part of each book, examine and limit the specific purpose or application of each book.

The use of Workstation Shared Books requires only the understanding of a few menu commands to enable successful controlled sharing of information created. After opening the Shared Book window three commands enable successful use of the system:Lock -- allows exclusive rights to modify a file,Check in -- updates the "truth" in the Remote Shared Book after you have opened and modified your files, Unlock -- releases rights to modify a file and deletes the local copy of the file on you desktop. The files in the Shared Book view the remote Shared Book and are effectively the "truth". They are what is presently on the file server. One may always read the files on the Remote Shared Book even though someone has it locked and may be modifying it.

The Status column indicates if the file is locked with a "Lock" symbol (by you or anyone else); if it is local with a small terminal (it must be locked by you first) and with a " + " if the version on the desktop is more recent than the files on the Remote Shared Book. Normally these icons are black. If a locked icon is gray, it has a modified meaning. If the terminal is gray, someone else has the file locked, or you have checked a version of this file on another workstation that is more recent than the one you have locally. A gray " + " indicates that the display has not updated to allow a check for the version on the desktop being more recent than the files on the Remote Shared Book. After the creation of the library, it is recommended making all succeeding updates from the Shared Book. Use the Notes field in the Shared book window as a log to indicate recent information that is important to others about the status of activities with those entries you have checked out. You may also leave an explicit reason in the Entries property sheet. Use this to explain the immediate or intent for checking out the file or for supplementary information.

A reference is effectively a pointer to the Remote Shared Book. References have a number of useful purposes: They are ideally suited to be mailed to another since they do not take up any space on a workstation and are effectively pointers to the actual information. The Quick Queries menu item appears in the widow header of every Reference Icon to a Shared Book with database allowing one to quickly execute complex queries iconically from the Reference to Shared Book. One need not care where the actual database that will be queried is located. One will be automatically logged on and ready to find the information that is sought. Since the Reference icon opens to a Show All Levels display, one sees directly the full listing of a Shared Books contents. Reference icons are made by opening the file server to the Remote Shared Book and selecting Reference Selected Version or Reference latest Version.

Quick Queries is a considerably powerful Library Card Catalog that provides a speedy simple iconic method of flexible cross referencing and accessing of data that is part of files. It's easy to use since the SQL (System Query Language) is generated based on the icon selections across many books and many types of information contained in those files. Since the ORACLE database that Quick Queries uses is record oriented, applications that use tables or information or that have their output data organized as tables are best suited for Shared Books.

The information available for query is separated into blocks that correspond to types of information within ViewPoint Documents. This presently consists of filing Attributes e.g. File Name, Modified By, Modified On etc.; SVP Graphic Object Types e.g. PERT/CPM Chart Milestones and Activities or Data Flow Diagram Data Transformations or Data Stores. For Graphic Data Attachments, this may consist of columns of data that supplement the objects for which they are attachments. For PERT Chart activities, Responsibility and Location may be two types of data that support the activity. ViewPoint Fields may hold required data for documents in formats. ViewPoint Tables are treated as multiple VP Fields in a View Point Document.

The logic for creating a query to ORACLE is based on an AND logical relationship between each block type of information. An AND logical relationship also exists inside each of the blocks of information except for the Graphic Types and Relationships which are the same object icons that are available to be drawn in Graphics. The relationships between these objects are logical OR's. Although not shown, multiple Shared Books can be queried with an AND logical search criteria across many books.

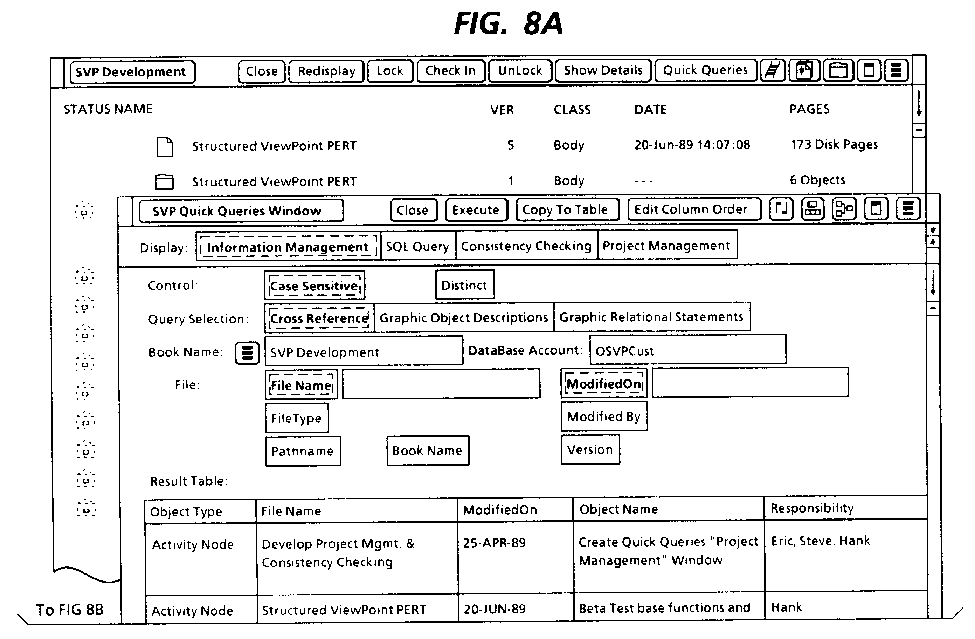

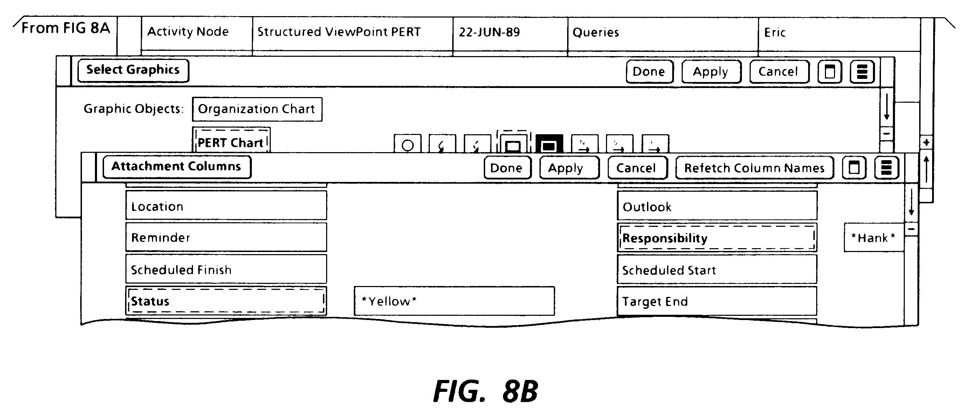

Figure 8 shows the Quick Query window data qualifications that compose a query that extends across these block types of data. To show all of the File names AND who they were Modified By AND for PERT/CPM Activities OR Milestones AND those that Hank's Responsible for AND what the Status of those that are YELLOW, the icons are simply turned on by clicking over the item and then entering qualifying data in each of the text item fields. This constitutes the query statement sentence above. The appropriate data is returned per that specification. Actually you are allowed to qualify your queries with the wildcard * and the comparison operators =, ⟨⟩, ⟩, ⟩ =, BETWEEN... AND ...,, In (list) LIKE, IS NULL, and the negation of the last four operators using NOT: NOT BETWEEN, NOT IN, NOT LIKE and IS NOT NULL.

The Shared Library data that you acquire from Quick Queries can easily be converted into Data Driven Graphics and Gantt Charts as well as ViewPoint Tables. You may also decide to use the resulting ViewPoint Tables as input to existing ViewPoint Data Driven Graphics to tie-in existing ViewPoint data enhancement capabilities.

For executing queries on data contained in the Shared Library not supported as part of Quick Queries, you may type and execute your own SQL (Structured Query Language) statements from the SQL Window. You now have access directly to the ORACLE database that backs the Shared Library. This can be very useful for calculations, plotting data driven graphics from ORACLE database data in a variety of applications.

SVP Quick Queries window is an electronic catalog for the Central Reference Libraries. Quick Queries will enable one to find information about Reference Books, Books, the actual files and VP Document Fields, VP Tables, Graphics, and Data Attachments within them. If one is using Quick Queries to search Central Reference Libraries, those Books will contain reference books to other Books in the remote Libraries. Then by opening the reference to those books, one will arrive at the actual file or VP document Level where one can search for detailed information within the files. In general, the procedure is: Find the reference Book you want. In the Shared Book that you opened Quick Queries from, find that reference Book. You may use the Container Find to do this in the Shared Book itself. Open the Reference Book. If this is the reference that you want to search, Copy the Reference to a Book to your desktop. Open the Reference Book and Select Quick Queries. Query the various files content for any of the information within it that your are interested in.

Once you are at a level where you are querying a Shared Book that contains ViewPoint Documents, you may query the contents of the ViewPoint documents very quickly. One can specify those potentially complex queries simply by selecting the appropriate Quick Queries information group (graphic) icons in the top of the Quick Queries Window. At any point you can always Open or Print the actual document itself from the Shared Book to examine its' contents.

While there has been illustrated and described what is at present considered to be a preferred embodiment of the present invention, it will be appreciated that numerous changes and modifications are likely to occur to those skilled in the art, and it is intended in the appended claims to cover all those changes and modifications which fall within the true spirit and scope of the present invention.

**Claims**

1. In electronic workstation device having a keyboard and display screen desktop, the technique of providing a library metaphor with associated icons for accessing information, the metaphor including a shared books with data base metaphor, a reference books metaphor, and a card catalog metaphor in one system that allows large object oriented data bases to be organized and accessed in an exclusive environment, comprising the steps of of:

   accessing the electronic card catalog to obtain information about the books and the contents of the books,

   accessing a book of references to books in either the central library or the project library,

   accessing a given book in either the central library or the project library,

   creating a visual hierarchy of related and shared large object oriented data bases, and

   allowing mutually exclusive access to the metaphors within the library.

2. The method of claim 1 including the step of providing the organization, accessibility, and electronic appearance of a library.

3. The method of claim 1 including the step of providing access to screen icons and addressing dynamic development information.

4. In a electronic workstation device having a keyboard and display screen desktop, the technique of providing a library metaphor with associated icons for accessing information, the metaphor including a central library having a collection of books including reference books, a project library having a collection of books including reference books, an electronic card catalog having book filing information comprising the steps of:

   accessing the electronic card catalog to obtain information about the books and the contents of the books,

   accessing a book of references to books in either the central library or the project library,

   accessing a given book in either the central library or the project library,

   and viewing said given book on the display screen desk top.

5. The method of claim 4 including the steps of making selected modifications to elements of said book and automatically providing selected modifications to the electronic card catalog

6. An electronic library metaphor on a computer workstation that includes a shared books with data base metaphor, a reference books metaphor, and a card catalog metaphor in one system, including large object oriented data bases organized and accessed in an exclusive environment and means to access screen icons, means to create a visual hierarchy of related and shared objects, and means to allow mutually exclusive access to the metaphors within the library.

7. In an electronic workstation device having a keyboard and display screen desktop,, the workstation being electrically interconnected to a shared data base, the shared data base including a central library having a collection of books and an electronic card catalog accessible to a plurality of users, the screen display desktop being provided with a plurality of window options for access to the data base, a method of access to the data base comprising the steps of:

accessing the electronic card catalog to obtain information about the books, and their contents

selecting a given book in the central library,

determining that said given book in the central library is accessible, and

viewing said given book on the display screen desk top.

8. The electronic workstation device of claim 7 wherein the shared data base includes a collection of reference books, the reference books available to said plurality of users.

9. The electronic workstation device of claim 7 wherein the shared data base includes a project library having a collection of books including reference books, the project library including the collection of books and reference books being accessible by reference to the electronic card catalog.

10. The method of claim 7 including the steps of making selected modifications to elements of said book and automatically providing said selected modifications to the electronic card catalog.

11. In a electronic workstation device having a keyboard and display screen desktop, the workstation being electrically interconnected to a shared data base, the shared data base including a central library having a collection of books and an electronic card catalog accessible to a plurality of users, the shared data base including a collection of reference books, the reference books available to said plurality of users, the screen display desktop being provided with a plurality of window options for access to the data base, a method of access to the data base comprising the steps of:

accessing the electronic card catalog to obtain information about the books,

selecting a given book in the central library,

determining that said given book in the central library is accessible, and making selected modifications to elements of said book and automatically providing said selected modifications to the electronic card catalog.

12. In a library metaphor in an electronic workstation device having a keyboard and display screen desktop, the workstation being electronically interconnected to a remote, shared data base, the screen display desktop being provided with a plurality of window options for access to the data base through the use of screen icon representations, the shared data base and the workstation device combining to provide a metaphor for accessing the information in the data base, the metaphor including a collection of books, a method of access to the data base comprising the steps of:

entering a quick query access mode,

selecting an information management window to provide a plurality of book related prompts and filing attribute prompts,

selecting a given book or file for access, and

optionally displaying a plurality of icons representing attributes of the book.

13. In a library metaphor in an electronic workstation device having a keyboard and display screen desktop, the workstation being electrically interconnected to a shared data base, the screen display desktop being provided with a plurality of options for access to the data base through the use of screen text and icon representations, a method of access to the data base comprising the steps of:

entering an access mode,

selecting an information query to provide a plurality of text or graphic symbol up fields, or table element prompts,

providing search text or comparison criteria for the information query,

selecting a least one of said plurality of prompts to display additional prompts,

initiating a common search of the shared data base according to selected prompts, and

displaying the results of the search of the shared data base on said display screen.

14. In a electronic workstation device having a keyboard and display screen desktop, the workstation being interconnected to a shared data base, the screen display desktop being provided with a plurality of options for access to the data base through the use of screen icon representations, the shared data base and the workstation device combining to provide for the accessing of the information in the data base, a method of access to the data base comprising the steps of:

entering query access mode,

selecting an information management window to provide a plurality of prompts and filing attribute prompts,

selecting a given document for access, and

optionally displaying a plurality of icons representing attributes of the document.

15. In a electronic workstation device having a keyboard, mouse pointer, and display screen desktop, the workstation providing a library metaphor including a reference book metaphor and a card catalog metaphor the method of creating graphics comprising the steps of:

creating a frame on a portion of the display by use of the keyboard for graphic models,

selecting a properties function to set frame properties and represent a plurality of graphic techniques by icons,

selecting one of said icons to select a particular one of said plurality of graphic techniques, with text or comparison criteria

representing a plurality of associated objects for said particular one of said plurality of graphic techniques, and

selecting a sequence of said associated objects in order to produce a graphic model and providing textual attachments related to selected associated objects.

16. In a library metaphor in an electronic workstation device having a keyboard and display screen desktop, the workstation being electrically interconnected to a shared data base, the screen display desktop being provided with a plurality of options for access to the data base through the use of screen text and icon representations, a method of access to the data base comprising the steps of:

entering an access mode,

providing search text or comparison criteria for the information query,

selecting at least one of said plurality of document abstraction prompts to display additional prompts,

initiating a common search of the shared data base according to selected graphic symbol prompts and search text, and

displaying the results of the search of the shared data base on said display screen.

17. The method of claim 16 wherein the document abstraction prompts as VP Fields.

18. The method of claim 16 wherein the document abstraction prompts are table element.

19. The method of claim 16 wherein the document abstraction prompts are text or graphics.

20. The method of claim 16 wherein the document abstraction prompts are a combination of text or graphics, VP Fields, and table elements.

Electronic Printer

_10_

UNIX Mini
Computer

Print Server

Ethernet Local Area Network (LAN)

File Server

File/Mail/Com
Server

**FIG. 1**

**FIG. 2**

EP 0 472 070 A2

**Card Catalog**

Accesses

**Workstation Desktop (Workstation)**

**Workstation View of Books**

Accesses

**Central Library (File Server)**

Reference Section

**Filing Information**

Describes

Accesses

**Project Library (File Server)**

Reference Section

Book of References to Books

**Book of References to Books**

Books (Shared Books with Data Bases)

**Books (Shared Books with Data Bases)**

**FIG. 3**

EP 0 472 070 A2

*FIG. 4*

SVP Quick Queries Window | Close | Execute | Copy To Table | Edit Column Order

Display: Information Management | SQL Query | Consistency Checking | Project Management

Accessible from — Reference to Shared Books

Accessible from — Remote Shared Book (Truth)

Describes

Contained in — File Drawer

May be Modified from

Shared Book for Project A

Accessible from

Contained in

Document and Other Files

Reference Information
(Files on Server)

Resident Files
on Desktop

**FIG. 5**

EP 0 472 070 A2

FIG. 6

| SVP Book Properties | | | Done | Cancel | ⬜ | ☰ |

Select Book Type | BOOK | SHARED BOOK | **SHARED BOOK WITH DATABASE**

Book Name: | Eclipse Shared Book with Data Base

Owner: - - -

Revision: - - -                    Last Modified:  - - - - - - - - - -

Number of Contained Items:      0          Size In Pages:          0

| **Sorted** | Unsorted |     | **Name** |          | **A-Z** | Z-A |
                               | Version Date |

Notes: | |

Remote Location: | |

| **Keep All Versions** | Limit Number Of Versions To Keep |

Data Base Service: | |

Host Account: | |

Host Password: | |

Data Base Account: | |

Data Base Password: | |

Limit Retrieved Rows To:      | 20 |

Display      | 80 | characters of LONG data types

Data Base Populated With:      | All Versions | **Latest Version Only** |

Send ViewPoint Document Fields Info To Database:      | Yes | **No** |

# FIG. 7

# FIG. 8A

| SVP Development | Close | Redisplay | Lock | Check In | UnLock | Show Details | Quick Queries | ▣ ▣ ▣ ▣ ▣ |

| STATUS NAME | VER | CLASS | DATE | PAGES |
|---|---|---|---|---|
| ▯ Structured ViewPoint PERT | 5 | Body | 20-Jun-89 14:07:08 | 173 Disk Pages |
| ▭ Structured ViewPoint PERT | 1 | Body | - - - | 6 Objects |

| SVP Quick Queries Window | Close | Execute | Copy To Table | Edit Column Order | ▣ ▣ ▣ ▣ ▣ |

Display: | Information Management | SQL Query | Consistency Checking | Project Management |

Control: | Case Sensitive | | Distinct |

Query Selection: | Cross Reference | Graphic Object Descriptions | Graphic Relational Statements |

Book Name: ▣ | SVP Development | DataBase Account: | OSVPCust |

File: | File Name | | | ModifiedOn | |

| FileType | | Modified By |

| Pathname | | Book Name | | Version |

Result Table:

| Object Type | File Name | ModifiedOn | Object Name | Responsibility |
|---|---|---|---|---|
| Activity Node | Develop Project Mgmt. & Consistency Checking | 25-APR-89 | Create Quick Queries "Project Management" Window | Eric, Steve, Hank |
| Activity Node | Structured ViewPoint PERT | 20-JUN-89 | Beta Test base functions and | Hank |

To FIG 8B

EP 0 472 070 A2

| Activity Node | Structured ViewPoint PERT | 22-JUN-89 | Queries | Eric |
|---|---|---|---|---|

**Select Graphics**  [ Done ] [ Apply ] [ Cancel ] [ ▯ ] [ ☰ ]

Graphic Objects: | Organization Chart |

| PERT Chart |   ○  ⌇  ⌇  ▭  ■  ↱  ↱  ↱

**Attachment Columns**  [ Done ] [ Apply ] [ Cancel ] [ Refetch Column Names ] [ ▯ ] [ ☰ ]

| Location | | Outlook | |
|---|---|---|---|
| Reminder | | Responsibility | *Hank* |
| Scheduled Finish | | Scheduled Start | |
| Status | *Yellow* | Target End | |

## FIG. 8B

EP 0 472 070 A2